# EUROPÄISCHE PATENTSCHRIFT

(11) **EP 0 852 571 B1**
(45) Veröffentlichungstag und Bekanntmachung des Hinweises auf die Patenterteilung: **25.06.2003**
(21) Anmeldenummer: 97935525.2
(22) Anmeldetag: 17.07.1997
(51) Int. Cl.: C03B 37/014, C03B 20/00

(54) **VERFAHREN ZUR HERSTELLUNG VON QUARZGLASKÖRPERN**
METHOD OF PRODUCING QUARTZ GLASS BODIES
PROCEDE DE PRODUCTION DE CORPS EN VERRE DE QUARTZ

(30) Priorität: 18.07.1996 DE 19628958
(43) Veröffentlichungstag der Anmeldung: 15.07.1998
(73) Patentinhaber: Heraeus Tenevo AG, 63450 Hanau (DE)
(72) Erfinder: SCHAPER, Hartwig, D-63741 Aschaffenburg (DE); RUPPERT, Klaus, D-63477 Maintal (DE)
(74) Vertreter: Staudt, Armin, Dipl.-Ing.
(86) Internationale Anmeldenummer: EP9703818
(87) Internationale Veröffentlichungsnummer: WO98003440

(56) Entgegenhaltungen:
- EP-A- 0 476 218

## Beschreibung

Die Erfindung betrifft ein Verfahren zur Herstellung von Quarzglaskörpem, durch Abscheiden von SiO₂-Partikeln auf der Zylindermantelfläche eines um seine Längsachse rotierenden, zylinderförmigen Trägers unter Bildung einer länglichen, porösen Vorform, wobei die SiO₂-Partikel in einer Vielzahl von Abscheidebrennern gebildet werden, die in mindestens einer parallel zur Längsachse des Trägers verlaufenden Brennerreihe, die zwischen Wendepunkten, an denen sich ihre Bewegungsrichtung umkehrt mit einer vorgegebenen Translationsgeschwindigkeit hin- und herbewegt wird, angeordnet sind, und Sintern der so hergestellten Vorform.

Ein derartiges Verfahren ist in der EP-A1-0 476 218 beschrieben. Bei dem bekannten Verfahren werden mittels Flammhydrolyse-Brennem auf einem waagerecht orientierten, um seine Längsachse rotierenden Substratstab SiO₂-Partikel schichtweise abgeschieden. Die Brenner sind mit äquidistanten Abstand von 10 cm zueinander auf einem parallel zur Längsachse des Substratstabes verlaufenden Brennerblock montiert. Der Brennerblock wird entlang der während der Abscheidung der SiO₂-Partikel sich bildenden porösen, zylinderförmigen Vorform zwischen einem linken und einem rechten Wendepunkt hin- und herbewegt. Die Amplitude dieser Translationsbewegung des Brennerblockes ist kleiner als die Länge der Vorform. Durch das Abbremsen der Translationsbewegung des Brennerblocks bei der Umkehr der Bewegungsrichtung im Bereich der Wendepunkte kommt es dort zu einer Überhitzung der Vorformoberfläche und daher zu lokalen, axialen Dichteschwankungen in der Vorform. Dadurch werden Bereiche unterschiedlicher Reaktivität in der Vorform erzeugt, die sich insbesondere bei nachfolgenden chemischen Reaktionen bei der Weiterverarbeitung der Vorform bemerkbar machen und nach dem Sintern der Vorform Inhomogenitäten im Quarzglaskörper hinterlassen können.

Zur Lösung dieses Problems wird in der EP-A1-0 476 218 vorgeschlagen, die Wendepunkte der Brennerblockbewegung relativ zu der Vorform kontinuierlich zu verlagern und dadurch gleichmäßig über die Vorform zu verteilen. Hierzu werden bei jedem Brennerdurchgang sowohl die rechten, als auch die linken Wendepunkte um einige Millimeter verlagert.

Dadurch werden die an den Wendepunkten entstehenden lokalen Dichteschwankungen aber lediglich gleichmäßig in der Vorform verteilt. Darüberhinaus erfordert die komplizierte Translationsbewegung des Brennerblocks bei dem bekannten Verfahren eine hohen apparativen und regelungstechnischen Aufwand.

Der vorliegenden Erfindung liegt daher die Aufgabe zugrunde, ein Verfahren bereitzustellen, das die Herstellung einer Vorform ermöglicht, die weitgehend frei ist von lokalen axialen Dichteschwankungen und das einfach durchführbar ist.

Diese Aufgabe wird ausgehend von dem eingangs genannten Verfahren erfindungsgemäß dadurch gelöst, daß der Basiswert der Oberflächentemperatur der sich bildenden Vor-form im Bereich zwischen 1050 °C und 1350 °C, die mittlere Umfangsgeschwindigkeit der Vor-form im Bereich zwischen 8 m/min und 15 m/min und die mittlere Translationsgeschwindigkeit der Brennerreihe im Bereich zwischen 300 mm/min und 800 mm/min gehalten werden, und/oder daß im Bereich der Wendepunkte die Flammentemperatur der Abscheidebrenner gesenkt wird.

Die Oberflächentemperatur der Vorform wird auf der Vorformoberfläche im Auftreffpunkt der Flamme eines der mittleren Abscheidebrenner der Brennerreihe gemessen. Hierzu wird ein Pyrometer der Firma IMPAC mit der Bezeichnung "Infratherm IN 4/5" verwendet, dessen Meßwellenlänge bei 5,14 µm liegt. Bei einem Abstand des Pyrometers von der Vorformoberfläche von 30 cm beträgt der Durchmesser des Meßflecks bei einer Temperatur zwischen 500 °C und 1300 °C ca. 5 mm. Der Auftreffpunkt der Flamme des Abscheidbrenners hat einen etwas größeren Durchmesser von ca. 15 mm. Bei korrekter Justierung des Pyrometers befindet sich der Meßfleck innerhalb des Flammen-Auftreffpunktes. Bei einer Dejustierung ist der gemessene Temperaturwert niedriger als die tatsächliche Temperatur. Der bei korrekter Justierung gemessene Temperaturwert wird im folgenden als Oberflächentemperatur der Vorform bezeichnet.

Durch das Abbremsen der Translationsbewegung der Brennerreihe in der Nähe eines Wendepunktes steigt dort die Oberflächentemperatur an, fällt nach Durchlaufen des Wendepunktes allmählich wieder ab und erreicht zwischen den Wendepunkten einen minimalen Temperaturwert. Dieser Temperaturwert wird im folgenden als Basiswert der Oberflächentemperatur bezeichnet.

Dieser Temperaturwert bestimmt im wesentlichen die Dichte der porösen Vorform. Bezogen auf die Dichte von Quarzglas (2,2 g/cm³) werden bei einer Abscheidung von SiO₂-Partikel im angegebenen Temperaturbereich üblicherweise mittlere relative Dichten der Vorform im Bereich zwischen 15% und 35% erreicht. Für eine möglichst genaue Ermittlung der mittleren relativen Dichte der Vorform werden über die Länge der Vorform zehn gleichmäßig verteilte Bohrkernproben mit einem Durchmesser von 3 cm genommen und deren Dichten jeweils mittels Quecksilber-Pyknometrie gemessen. Die mittlere relative Dichte der Vorform ergibt sich dann aus dem arithmetischen Mittelwert dieser Meßwerte, bezogen auf die oben genannte theoretische Dichte von Quarzglas.

Der Basiswert der Oberflächentemperatur wird im wesentlichen durch die Flammentemperatur der Abscheidebrenner, die Anzahl und den Abstand der Abscheidebrenner von der Vorformoberfläche sowie durch deren Größe bestimmt. Er kann von einem Fachmann leicht auf einen Wert im Bereich zwischen 1050 °C und 1350 °C eingestellt werden. Für die Bildung der porösen Vorform können auch mehrere Brennerreihen eingesetzt werden. Die Auftreffpunkte der Abscheidebrenner der verschiedenen Reihen können dabei in einer gemeinsamen Linie auf der Vorformoberfläche verlaufen. Die Abscheidebrenner unterschiedlicher Reihen können - in Richtung senkrecht zur Zylinderachse des Trägers gesehen - auf einer Höhe oder auch versetzt zueinander angeordnet sein. Für den Fall mehrerer Brennerreihen genügt es, den Basiswert der Oberflächentemperatur bei einer der Reihen zu ermitteln.

Es hat sich gezeigt, daß bei einem Basiswert der Oberflächentemparatur im Bereich zwischen 1050 °C und 1350 °C eine relativ geringe Erhöhung der Oberflächentemperatur gegenüber dem Basiswert im Bereich der Wendepunkte von maximal 150 °C erreicht wird, wenn die angegebenen Geschwindigkeitsbereiche für die mittlere Umfangsgeschwindigkeit der Vorform oder für die mittlere Translationsgeschwindigkeit der Brennerreihe eingehalten werden. Mit einer Temperaturerhöhung um 150 °C geht eine Erhöhung der relativen Dichte um maximal ca. 6 Prozentpunkte einher. Ein solcher axialer Dichtegradient in der Vorform vermindert nicht die Brauchbarkeit des daraus nach dem Sintem hergestellten Quarzglaskörpers für viele Anwendungen. Selbstverständlich ist die Erhöhung der relativen Dichte umso geringer, je kleiner der Temperaturunterschied zwischen dem Basiswert und dem Maximalwert im Bereich der Wendepunkte gehalten wird.

Als wesentlich hat es sich erwiesen, daß die Relativbewegung der Abscheidebrenner zur Vorformoberfläche im Mittel (über den gesamten Bewegungszyklus gesehen) relativ klein ist. Auf Grundlage dieser Erkenntnis und der angegebenen Geschwindigkeitsbereiche für die mittlere Umfangsgeschwindigkeit der Vorform und für die mittlere Translationsgeschwindigkeit der Brennerreihe, kann der Fachmann anhand weniger Versuche diese Maßnahmen so optimieren, daß an den Wendepunkten die Temperaturerhöhung 150 °C gegenüber dem Basiswert der Oberflächentemperatur nicht überschreitet. Dadurch, daß eine oder beide der genannten Geschwindigkeiten während einer Hin- und Herbewegung der Brennerreihe (im folgenden als "Bewegungszyklus" bezeichnet) auf einem relativ kleinen, mittleren Wert eingestellt werden, wird die Vorformoberfläche in der Nähe des Flammenauftreffpunktes gut durchwärmt. Der Unterschied zwischen der Temperatur der gut durchwärmten Oberfläche und der höheren Temperatur im Bereich der Wendepunkte ist daher relativ gering. Die relative Temperaturerhöhung im Bereich der Wendepunkte (im Vergleich zur gut durchwärmten Vorformoberfläche) ist daher umso kleiner, je geringer die Geschwindigkeit der Relativbewegung zwischen der Vorformoberfläche und der Brennereihe im Mittel ist. Eine langsame Relativbewegung ermöglicht es, die Vorform über ihre gesamte Länge mit einer zeitlich und räumlich möglichst gieich hohen Heizleistung zu beaufschlagen.

Unter der mittleren Translationsgeschwindigkeit der Brennerreihe wird das Verhältnis der bei einem Bewegungszyklus zurückgelegten Strecke und der dafür benötigten Zeit verstanden.

Die mittlere Umfangsgeschwindigkeit der sich bildenden Vorform ergibt sich aus der Strecke, die jeder Punkt am Umfang der Vorform während eines Bewegungszyklus zurücklegt, bezogen auf die dafür benötigte Zeit.

Üblicherweise wird die mittlere Translationsgeschwindigkeit während des gesamten Abscheide-Verfahrens konstant gehalten. Dabei ist aber zu beachten, daß an den Wendepunkten die Translationsgeschwindigkeit gleich Null ist und in der Praxis das Abbremsen der Brennerreihe einen Bremsweg und das Beschleunigen eine Beschleunigungsstrecke erfordern, bei deren Durchlaufen die mittlere Translationsgeschwindigkeit zwangsläufig nicht eingestellt sein kann.

Die mittlere Umfangsgeschwindigkeit kann ebenfalls während des gesamten Abscheide-Verfahrens konstant gehalten werden. In diesem Fall ist die Rotationsgeschwindigkeit des Trägers kontinuierlich zu verringern, da der Außendurchmesser der Vorform und damit seine Zylindermantelfläche im Verlaufe des Abscheide-Verfahrens kontinuierlich größer werden.

Sowohl die Translationsgeschwindigkeit, als auch die Umfangsgeschwindigkeit können während des Bewegungszyklus variiert werden, beispielsweise kann die Umfangsgeschwindigkeit im Bereich der Wendepunkte erhöht werden.

In kinematischer Umkehr kann anstelle der Brennerreihe oder zusätzlich dazu selbstverständlich auch die Vorform hin- und herbewegt werden, wobei dann an die Stelle der Translationsgeschwindigkeit der Brennerreihe die Translationsgeschwindigkeit der Vorform, bzw. die Relativgeschwindigkeit zwischen der Brennerreihe und die Vorformoberfläche zu beachten ist.

Als nachteilig hat es sich erwiesen, wenn der Vorformbereich zwischen benachbarten Wendepunkten während eines Bewegungszyklus auf eine zu geringe Temperatur abkühlen kann. Eine solche nachteilige Abkühlung wird durch die angegebenen Mindestgeschwindigkeiten für die mittlere Umfangsgeschwindigkeit der Vorform bzw. für die mittlere Translationsgeschwindigkeit der Brennerreihe verhindert.

Mit dem erfindungsgemäßen Verfahren werden axiale Dichtegradienten in der Vorform weitgehend vermieden; es geht daher über eine lediglich gleichmäßige Verteilung von Dichtegradienten in der Vorform, wie im Stand der Technik beschrieben, hinaus. Eine Verlagerung der Wendepunkte ist hierfür nicht erforderlich, so daß der apparative und regelungstechnische Aufwand gering gehalten werden kann. Als ergänzende Maßnahme ist eine Verlagerung der Wendepunkte aber denkbar.

Weiterhin wird die oben genannte Aufgabe ausgehend von dem Verfahren gemäß der angegebenen Gattung erfindungsgemäß dadurch gelöst, daß im Bereich der Wendepunkte die Flammentemperatur der Abscheidebrenner gesenkt wird.

Mittels dieser Maßnahme kann eine Temperaturerhöhung der Vorformoberfläche im Bereich der Wendepunkte ganz oder teilweise kompensiert werden. Die Temperaturerhöhung im Bereich der Wendepunkte überschreitet den oben definierten Basiswert der Oberflächentemperatur der Vorform somit nicht oder nur geringfügig. Damit wird erreicht, daß die Vorform über ihre gesamte Länge mit einer zeitlich und räumlich möglichst gleich hohen Heizleistung beaufschlagt wird. Axiale Dichtegradienten in der Vorform werden somit weitgehend vermieden.

Die Veränderung der Flammentemperatur im Bereich der Wendepunkte kann geregelt oder gesteuert erfolgen. Die Stärke der erforderlichen Veränderung hängt von einer Vielzahl von Vorgaben ab, beispielsweise von den aktuellen Parameterwerten, dem Basiswert der Oberflächentemperatur der Vorform oder von dem tolerierbaren axialen Dichtegradienten der Vorform. Die Veränderung der Flammentemperatur kann aber vom Fachmann auf Grundlage der angegebenen Lehre anhand weniger Versuche für den konkreten Einzelfall leicht optimiert werden.

Die Senkung der Flammentemperatur der Abscheidebrenner bezieht sich auf die Flammentemperatur, wie sie im Mittel im Bereich zwischen den Wendepunkten eingestellt ist.

Der Bereich um die Wendepunkte, in dem diese zusätzlichen Maßnahme sinnvoll ist, beginnt bei einer Größenordnung von einigen Millimetern um die jeweiligen Wendepunkte. Der Bereich kann aber bis über die Mitte benachbarter Wendepunkte hinausreichen, wie dies weiter unten für den Fall einer kontinuierlichen Veränderung der Flammentemperatur in einem Übergangsbereich näher erläutert wird.

Auf eine axiale Variation der Wendepunkte des Brennerreihe kann auch bei dieser Verfahrensweise verzichtet werden. Daher ist trotz der erforderlichen regelungstechnischen oder Steuerungseinrichtungen der apparative Aufwand im Vergleich zu dem eingangs beschriebenen, aus dem Stand der Technik bekannten Verfahren gering. Als ergänzende Maßnahme ist eine Variation der Brenner-Wendepunkte aber denkbar.

Als vorteilhaft hat es sich erwiesen, den Abstand benachbarter Wendepunkte im Bereich zwischen 5 cm und 40 cm zu halten. Dies trägt dazu bei, ein übermäßiges Abkühlen der Vorformoberfläche zwischen benachbarten Wendepunkten während eines Bewegungszyklus zu verhindern.

In dieser Hinsicht hat es sich auch bewährt, zwischen zwei benachbarten Abscheidebrennem einer Brennerreihe jeweils mindestens einen Warmhaltebrenner einzusetzen. Die Warmhaltebrenner, die entsprechend der Bewegung der Brennerreihe bewegt werden, verkürzen den Abstand der be-heizten Bereiche auf der Vorform. Sie können mittig zwischen den Abscheldebrennem angeordnet sein. Hierzu können die Warmhaltebrenner auf der gleichen Brennerreihe oder auf einer separaten, synchron zur Bewegung der Brennerreihe entlang dem Träger bewegten, Warmhalteblock angeordnet sein.

Bei einer bevorzugten Verfahrensweise wird eine Senkung der Flammentemperatur erreicht, indem die Zufuhrrate von Brennergasen zu den Abscheidebrennem relativ zu den Zufuhrraten von anderen den Abscheidebrennem zugeführten Gasen verringert wird. Unter den Brennergasen werden diejenigen Gase verstanden, deren exotherme Reaktion miteinander die Brennerflamme im wesentlichen speist. Bei einem Knallgasbrenner handelt es sich beispielsweise um die Brennergase Sauerstoff und Wasserstoff, wovon der Einfachheit halber im folgenden ausgegangen wird. Eine Senkung der Flammentemperatur wird entweder durch eine Verringerung der Zufuhrrate von Sauerstoff und/oder Wasserstoff zu den Abscheidebrennern oder durch eine Zufuhr oder eine Erhöhung der Zufuhrrate anderer Gase, wie beispielsweise von Inertgas oder von Ausgangsstoffen für die Bildung der SiO₂-Partikel erreicht.

Dabei hat es sich besonders bewährt, die Senkung der Flammentemperatur der Abscheidebrenner innerhalb von vor oder an den Wendepunkten endenden Übergangsbereichen allmählich vorzunehmen. Durch die allmähliche Änderung wird ein homogener Übergang zwischen den Vorform-Berei-chen um die Wendepunkte und den übrigen Bereichen der Vorform erreicht. Innerhalb der Übergangsbereiche wird der zu ändernde Parameter auf den gewünschten Wert eingeregelt. Die Einregelung des Wertes kann genau am Wendepunkt beendet sein, aber auch schon vorher. Die Übergangsbereiche erstrecken sich jeweils beiderseits der Wendepunkte. Bei der Wegbewegung der Brennerreihe von den Wendepunkten werden die vorher veränderten Parameter wieder allmählich auf ihren ursprünglichen Wert zurückgeregelt. Die Übergangsbereiche beginnen üblicherweise mindestens 10 mm vor dem jeweiligen Wendepunkt, da sich bei kürzeren Übergangsbereichen der Effekt einer allmählichen Änderung der Parameter kaum bemerkbar macht.

Bei ihrer Wegbewegung von den Wendepunkten überfährt die Brennerreihe Vorformbereiche, die durch das Erhitzen bei der Hinbewegung noch eine hohe Oberflächentemperatur aufweisen. Es hat sich daher als günstig erwiesen, bei der Hinbewegung der Brennerreihe zu den Wendepunkten einen kürzeren Übergangsbereich einzustellen als bei ihrer Wegbewegung von den Wendepunkten. Aufgrund des längeren Übergangsbereiches werden die jeweiligen Parameter langsamer auf ihren ursprünglichen Wert zurückgeregelt. Dadurch wird eine zu hohe Erhitzung der noch heißen Vorformbereiche möglichst vermieden.
Vorteilhafterweise wird die Temperatur der Vorformoberfläche im Flammenauftreffpunkt eines Abscheidebrenners gemessen, und der gemessene Wert wird zur Regelung der Flammentemperatur der Abscheidebrenner verwendet. Diese Maßnahme trägt zur Vermeidung einer unzulässigen Temperaturerhöhung an den Wendepunkten bei und ermöglicht die Einhaltung einer konstanten Vorform-Dichte über die gesamte Dauer der Abscheidung.

Alternativ dazu hat sich auch ein Verfahren bewährt, bei dem die Flammentemperatur der Abscheidebrenner gesteuert werden. Die Steuerung wird so eingestellt, daß bei jedem Bewegungszyklus der oder die Parameter im Bereich der Wendepunkte gleichermaßen verändert werden. Eine Steuerung wird besonders in den Fällen bevorzugt, in denen eine Regelung nicht sinnvoll oder nur mit hohem regelungstechnischen Aufwand zu verwirklichen ist.

Als besonders vorteilhaft hat sich eine kombinierte Verfahrensweise erwiesen, bei der einerseits der Basiswert der Oberflächentemperatur der sich bildenden Vorform im Bereich zwischen 1050 °C und 1350 °C, die mittlere Umfangsgeschwindigkeit der Vorform im Bereich zwischen 8 m/min und 15 m/min und die mittlere Translationsgeschwindigkeit der Brennerreihe im Bereich zwischen 300 mm/min und 800 mm/min gehalten wird, und bei der andererseits zusätzlich im Bereich der Wendepunkte die Flammentemperatur der Abscheidebrenner gesenkt wird. Die oben näher erläuterten vorteilhaften Ausführungsformen der einzelnen erfindungsgemäßen Verfahrensweisen, haben sich auch für eine solche kombinierte Verfahrensweise bewährt.

Sowohl die Einhaltung der Oberflächentemperatur und der genannten Geschwindigkeiten als auch die Veränderung der Flammentemperatur im Bereich der Wendepunkte zielen auf eine zeitlich und örtlich möglichst gleichmäßige Beheizung der Vorform ab und tragen dazu bei, daß der Unterschied zwischen dem Basiswert der Oberflächentemperatur und der Temperatur an den Wendepunkten möglichst gering gehalten werden kann. Durch die Kombination der Maßnahmen wird dieser Temperaturunterschied daher besonders gering gehalten.

Ausführungsbeispiele des erfindungsgemäßen Verfahrens sind in der Patentzeichnung dargestellt und werden nachfolgend näher erläutert In der Zeichung zeigen im einzelnen in schematischer Darstellung
- **Figur 1**: einen Bewegungszyklus mit einer konstanten Translationsgeschwindigkeit des Brennerblocks und einer konstanten Umfangsgeschwindigkeit der Vorform anhand von Geschwindigkeitsprofilen,
- **Figur 2**: einen Bewegungszyklus, bei dem in einem Übergangsbereich die Flammentemperatur der Abscheidebrenner variiert wird, anhand eines Temperaturprofils,
- **Figur 3**: einen Bewegungszyklus, bei dem in einem Übergangsbereich die Flammentemperatur der Abscheidebrenner variiert wird, anhand eines weiteren Temperaturprofils, und
- **Figur 4**: eine Vorrichtung zur Durchführung des erfindungsgemäßen Verfahrens in einer Seitenansicht.

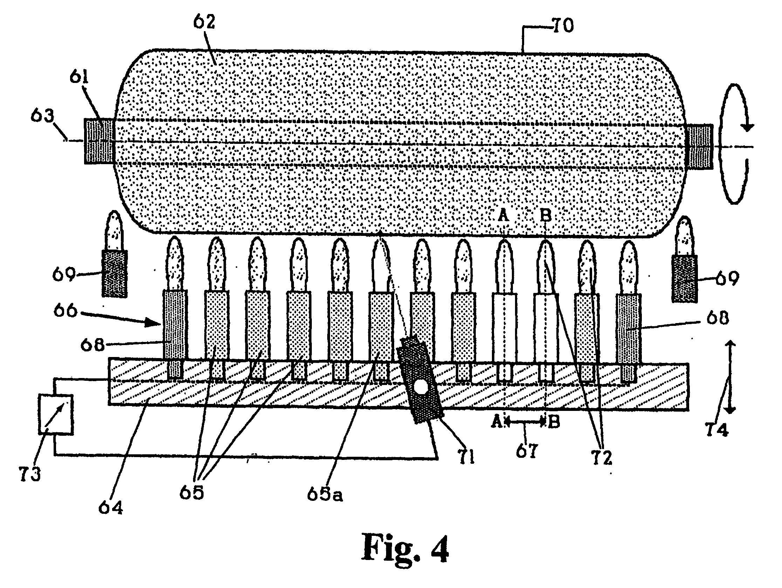

In **Figur 4** ist schematisch eine Vorrichtung dargestellt, wie sie bei den nachfolgend näher erläuterten Ausführungsbeispielen zur Durchführung des erfindungsgemäßen Verfahrens eingesetzt worden ist. Auf einem um seine Längsachse 63 rotierenden Träger 61 aus Aluminiumoxid wird eine poröse Vorform 62 aus SiO₂-Partikeln abgeschieden. Die Abscheidung der SiO₂-Partikel erfolgt mittels Abscheidebrennem 65 aus Quarzglas, die in einer Reihe 66 auf einem parallel zur Längsachse 63 des Trägers 62 angeordneten Brennerblock 64 montiert sind. Der Brennerblock 64 wird dabei entlang der Längsachse 63 des Trägers 61 zwischen zwei, in Bezug auf die Längsachse 63 ortsfesten Wendepunkten hin- und herbewegt. Die Amplitude der Hin- und Herbewegung ist mittels des Richtungspfeiles 67 charakterisiert. Sie beträgt 15 cm und sie entspricht - in Richtung der Längsachse 63 gesehen - dem axialen Abstand der Wendepunkte bzw. demjenigen der Abscheidebrenner 65 voneinander.

Die Reihe 66 der Abscheidebrenner 65 für die Abscheidung wird auf beiden Seiten durch jeweils einen Zusatzbrenner 68 abgeschlossen. Die Zusatzbrenner 68 sind ebenfalls auf dem Brennerblock 64 montiert, wobei ihr Abstand vom benachbarten Abscheidebrenner 65 jeweils dem oben genannten Brennerabstand entspricht. Die Flammentemperatur der Zusatzbrenner 68 wird auf etwa den gleiche Wert eingestellt wie diejenige der Abscheidebrenner 65. Sie dienen dazu, in den Randbereichen der Brennerreihe 66, ein ähnliches Temperaturprofil zu erzeugen, wie in deren mittleren Bereich. Den Abscheidebrennem 65 werden jeweils als Brennergase Sauerstoff und Wasserstoff und als Ausgangsmaterial für die Bildung der SiO₂-Partikel gasförmiges SiCl₄ zugeführt. Die beiden Zusatzbrennem 68 werden lediglich mit den Brennergasen gespeist.

Im Bereich der beiden Stirnseiten der Vorform 62 sind zusätzliche Heizbrenner 69 vorgesehen, die in Bezug auf die Vorform 62 ortsfest montiert sind. Die Heizbrenner 69 erzeugen in den Randbereichen der Vorform 62 im Vergleich zu den Abscheidebrennem 65 bzw. den Zusatzbrennem 68 eine höhere Temperatur. Dies führt zu einer Verdichtung der beiderseitigen Enden der Vorform 62 und somit zu einer höheren mechanischen Stabilität.

Die Temperatur der Vorformoberfläche 70 wird kontinuierlich gemessen. Hierzu ist ein Pyrometer 71 auf die Vorformoberfläche 70 gerichtet, wobei sein Meßfleck im Auftreffpunkt der Flamme 72 eines der mittleren Abscheidebrenner 65a liegt. Das Pyrometer 71 ist mit dem Brennerblock 64 verbunden und wird mit diesem hin- und herbewegt. Es handelt sich um ein Pyrometer der Firma IMPAC mit der Bezeichnung "Infratherm IN 4/5", dessen Meßwellenlänge bei 5,14 µm liegt. Der Abstand des Pyrometers 71 von der Vorformoberfläche 70 beträgt 30 cm und der Durchmesser des Meßflecks ca. 5 mm. Der Auftreffpunkt der Flamme 72 des Abscheidbrenners 65a hat einen Durchmesser von ca. 15 mm. Aus den so gewonnenen Meßwerten wird der Basiswert der Oberflächentemperatur als die niedrigste Temperatur bei einem Bewegungszyklus, also einer Hin- und Herbewegung des Brennerblocks 64, ermittelt.

Das Pyrometer 71 ist mit einer Regeleinrichtung 73 verbunden, die die Brennergas-Zufuhr zu den Abscheidebrennem 65 regelt.

Der Abstand zwischen der Oberfläche 70 der Vorform 62 und dem Brennerblock 64 wird während der Abscheideprozesses konstant gehalten. Hierzu ist der Brennerblock 64 in einer Richtung senkrecht zur Längsachse 63 des Trägers 61 bewegbar, wie dies mit dem Richtungspfeil 74 angedeutet ist.

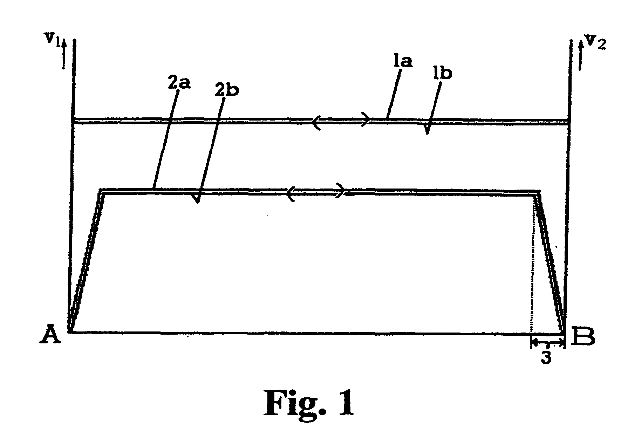

Bei den Diagrammen der Figuren 1 bis 3 sind Profile von Parametern dargestellt, die während eines Bewegungszyklus zwischen zwei benachbarten Wendepunkten A und B verändert werden. Auf der Ordinate ist jeweils die Strecke der Brennerblockbewegung zwischen den Wendepunkten A und B, und auf der Abszisse verschiedene Parameter der SiO₂-Abscheidung aufgetragen.

Die Kurven der Parameterprofile sind mit Richtungspfeilen versehen, die für jeden Kurvenabschnitt die jeweilige Richtung der Brennerblockbewegung angeben. Der deutlicheren Darstellung wegen sind auch bei übereinstimmenden Parameterwerten bei der Hin- und bei der Zurückbewegung in den Diagrammen die Kurven nebeneinander verlaufend (und nicht übereinander verlaufend) eingetragen.

### Ausführungsbeispiel 1

In **Figur 1** ist auf der Abszisse als v₁ die Umfangsgeschwindigkeit der Vorform und als v₂ die Translationsgeschwindigkeit des Brennerblocks aufgetragen.

Die Umfangsgeschwindigkeit v₁ ist während des gesamten Bewegungszyklus und während des gesamten Abscheide-Prozesses konstant auf 12 m/min eingestellt. In dem Diagramm ist der Kurvenabschnitt, der die Umfangsgeschwindigkeit bei der Hinbewegung des Brennerblocks zu dem Wendepunkt B repräsentiert mit 1a, und der Kurvenverlauf bei der Zurückbewegung des Brennerblocks vom Wendepunkt B zum Wendepunkt A mit 1b gekennzeichnet.

Die mittlere Translationsgeschwindigkeit des Brennerblocks beträgt 500 mm/min (Kurven 2a und 2b). v₂ wird - abgesehen von Brems - bzw. Beschleunigungsstrecken 3 im Bereich der Wendepunkte A, B, die für den Mittelwert der Translationsgeschwindigkeit vernachlässigbar sind - ebenfalls sowohl während des gesamten Bewegungszyklus, als auch während des gesamten Abscheide-Prozesses (vom Betrag her) konstant gehalten. Die Längen der Brems- bzw. Beschleunigungsstrecken 3 liegen im Bereich weniger Millimeter.

Das in Figur 1 dargestellte Geschwindigkeitsprofil wird während des gesamten Abscheide-Prozesses beibehalten. Auf der Vorformoberfläche wird während der Abscheidung ein Basiswert der Oberflächentemperatur von ca. 1250 °C gemessen. Dabei ist zu beachten, daß die Oberfläche mit zunehmendem Außendurchmesser der Vorform u. a. aufgrund der zunehmenden Wärmeabstrahlung schneller abkühlt. Um den Basiswert der Oberflächentemperatur konstant auf etwa 1250 °C zu halten, sind daher Maßnahmen erforderlich, die dem schnelleren Abkühlen entgegenwirken. Hierzu wird im Ausführungsbeispiel die Flammentemperatur der Abscheidebrenner kontinuierlich erhöht.

Die Umfangsgeschwindigkeit der Vorform v₁ sowie die mittlere Translationsgeschwindigkeit des Brennerblocks v₂ sind relativ klein. Aufgrunddessen ist auch die Geschwindigkeit der Relativbewegung zwischen den Abscheidebrennem und dem Brennerblock gering und es wird eine gute Durchwärmung der Vorform im Bereich des Auftreffpunktes der Brennerflamme erreicht.

Die Temperaturerhöhung aufgrund des doppelten Aufheizens der Vorformoberfläche durch die Hin- und Herbewegung im Bereich der Wendepunkte A, B beträgt daher lediglich 50 °C. Dadurch wird ein relativ flacher Verlauf der Oberflächentemperatur zwischen den Wendepunkten A, B und somit ein geringer Dichtegradient der Vorform in diesem Bereich gewährleistet.

### Ausführungsbeispiel 2

Die Umfangsgeschwindigkeit v₁ der Vorform und die Translationsgeschwindigkeit v₂ des Brennerblocks werden entsprechend dem anhand Figur 1 erläuterten Ausführungsbeispiel gesteuert. An der Vorformoberfläche wird während des Abscheide-Prozesses ein Basiswert der Oberflächentemperatur von konstant 1250 °C eingehalten. Zusätzlich wird bei diesem Ausführungsbeispiel im Bereich der Wendepunkte der Brennerblockbewegung die Flammentemperatur der Abscheidebrenner variiert.

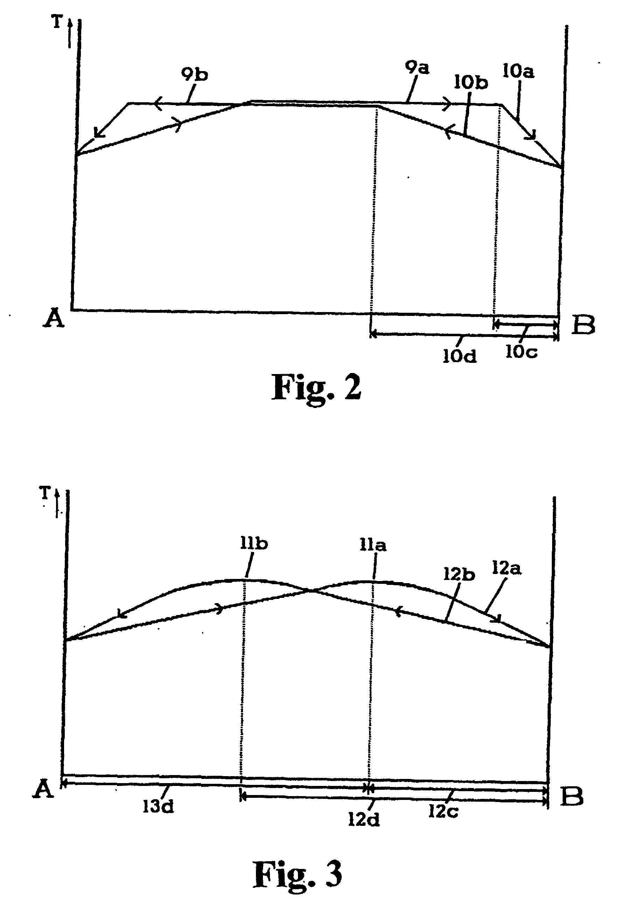

Die Variation der Flammentemperatur erfolgt programmgesteuert und wird anhand **Figur 2** näher erläutert. Auf der Abszisse ist die Flammentemperatur "T" der Abscheidebrenner in relativen Einheiten aufgetragen.

In einem mittleren Bereich zwischen den Wendepunkten A, B (Kurvenabschnitte 9a, 9b) wird die Flammentemperatur auf hohem Niveau konstant gehalten. Bei der Hinbewegung des Brennerblocks, beispielsweise in Richtung auf den Wendepunkt B und ab ca. 3 cm vor diesem, wird die Flammentemperatur in einem Übergangsbereich 10c kontinuierlich abgesenkt (Kurvenabschnitt 10a). Der Übergangsbereich 10c endet am Wendepunkt B.

In einer ersten Verfahrensvariante wird die Flammentemperatur abgesenkt, indem die Brennergaszufuhr kontinuierlich verringert wird, und zwar um insgesamt 8% ihres Anfangswertes, wie er unmittelbar vor dem Übergangsbereich 10c eingestellt ist. Dabei wird das Verhältnis von Sauerstoff zu Wasserstoff konstant gehalten. Auch die Zufuhr der übrigen Gase zu den Abscheidebrennem wird nicht verändert.

In einer zweiten Verfahrensvariante wird die Flammentemperatur abgesenkt, indem den Brennern zusätzlich Stickstoff zugeführt wird. Hierzu wird im Übergangsbereich 10c der Stickstoffstrom kontinuierlich bis zu einer Menge von etwa 20% der Wasserstoffzufuhr erhöht.

In einer dritten Verfahrensvariante wird die Flammentemperatur abgesenkt, indem den Brennern zusätzlich SiCl₄ zugeführt wird, wobei die Zufuhrrate der Brennergase konstant gehalten wird. Hierzu wird der SiCl₄ -Gasstrom kontinuierlich bis zu 20% seines Anfangswertes, wie er unmittelbar vor dem Übergangsbereich 10c eingestellt ist, erhöht.

Beim Zurückfahren des Brennerblocks vom Wendepunkt B wird die Flammentemperatur in einem weiteren Übergangsbereich 10d allmählich wieder auf den ursprünglichen Wert angehoben (Kurvenabschnitt 10b); jedoch erfolgt die Temperaturerhöhung etwas langsamer als die Temperaturabsenkung im Kurvenabschnitt 10a. Dies hat seinen Grund darin, daß beim Zurückfahren die Oberflächentemperatur der Vorform in dem an den Wendepunkt angrenzenden Bereich aufgrund der bei der Hinbewegung erfolgten Erhitzung noch erhöht ist. Um eine zusätzliche Erhitzung dieses Bereiches durch eine schnelle Erhöhung der Flammentemperatur zu vermeiden, wird diese langsamer als im Übergangsbereich 10c auf ihren ursprünglichen Wert erhöht, den sie im Kurvenabschnitt 9b schließlich erreicht. Durch diese unterschiedlich langen Übergangsbereiche 10c, 10d werden hohe Temperaturdifferenzen und damit Dichteunterschiede verhindert oder deutlich verringert.

Den gleichen Zweck erfüllt eine Verfahrensvariante, bei der die Flammentemperatur beim Zurückfahren von dem Wendepunkt B zunächst eine gewisse Strecke konstant niedrig gehalten und erst danach wieder erhöht wird, wie dies anhand des Ausführungsbeispiels 3 für ein ähnliches Verfahren näher erläutert wird.

Bei allen Verfahrensvarianten erfolgt die Erhöhung der Flammentemperatur durch Wiedereinstellung der ursprünglichen Gas-Zufuhrraten zu den Abscheidebrennem.

Durch die Absenkung der Flammentemperatur wird die Vorform im Bereich der Wendepunkte A, B mit einer geringeren Heizleistung beaufschlagt, so daß die Temperaturerhöhung aufgrund des doppelten Aufheizens der Vorformoberfläche durch die Hin- und Herbewegung im Bereich der Wendepunkte A, B lediglich 35 °C beträgt.

Bei einer weiteren Verfahrensvariante ist die Flammentemperatur der Abscheidebrenner mittels einer Regeleinrichtung einstellbar. Für die Regelung wird der Sollwert der Oberflächentemperatur auf 1250 °C eingestellt. Die Oberflächentemperatur der Vorform wird laufend am Auftreffpunkt der Flamme eines der Abscheidebrenner mittels einer Pyrometers gemessen. Bei einer Veränderung der Oberflächentemperatur, beispielsweise bei der Temperaturerhöhung im Bereich der Wendepunkte, wird die Flammentemperatur aller Abscheidebrenner mittels der Regelung durch Änderung eines oder mehrerer der den Abscheidbrennem zugeführten Gasströme angepaßt. Für die Änderung der Flammentemperatur sind die oben angegebenen Verfahrensvarianten geeignet. Die Regelung trägt insbesondere zur Vermeidung einer unzulässigen Temperaturerhöhung an den Wendepunkten bei und ermöglicht die Einhaltung einer konstanten Vorform-Dichte über die gesamte Dauer der Abscheidung. Die Temperaturerhöhung im Bereich der Wendepunkte läßt sich dadurch auf weniger als 30 °C begrenzen.

### Ausführungsbeispiel 3

Bei dem in **Figur 3** dargestellten Ausführungsbeispiel sind die Parameter der Abscheidung entsprechend der anhand Figur 2 erläuterten Verfahrensweise eingestellt. Im Unterschied zu dem in Figur 2 dargestellten Profil der Flammentemperatur "T" wird bei der Verfahrensweise gemäß.Figur 3 die Flammentemperatur jedoch programmgesteuert im Bewegungszyklus stetig variiert. Die Bereiche konstanter Flammentemperatur (Kurvenabschnitte 9a und 9b in Figur 2) entfallen bei diesem Temperaturprofil daher.

Bei der Hinbewegung des Brennerblocks auf den Wendepunkt B erreicht die Brennerflamme ihre Maximaltemperatur in einem Punkt 11 a, ca. 6 cm vor dem Wendepunkt B. Danach wird die Flammentemperatur in einem Übergangsbereich 12c stetig gesenkt (Kurvenabschnitt 12a) und erreicht ihre Minimaltemperatur am Wendepunkt B. Dort endet somit der Übergangsbereich 12c. Die Absenkung der Flammentemperatur erfolgt entsprechend den oben, anhand Figur 2 erläuterten Verfahrensvarianten.

Beim Zurückfahren des Brennerblocks wird die Flammentemperatur in einem weiteren Übergangsbereich 12d wieder allmählich auf die Maximaltemperatur gebracht, die sie im Punkt 11b des Temperaturprofils erreicht (Kurvenabschnitt 12b). Der Übergangsbereich 12d endet ca. 6 cm vor dem Wendepunkt A; er erstreckt sich somit vom Wendepunkt B an über eine Länge von ca. 9 cm. Durch die langsamere Temperaturerhöhung im Übergangsbereich 12d beim Zurückfahren wird eine Überhitzung der Vorformoberfläche in den dem Wendepunkt B angrenzenden Vorformbereichen vermieden, wie dies anhand Figur 2 bereits näher erläutert worden ist. Bei diesem Ausführunsbeispiel überlappen die jeweiligen Übergangsbereiche 12d, 13d beim Zurückfahren von den jeweiligen Wendepunkten A bzw. B.

Bei dieser Verfahrensvariante werden Unstetigkeiten der Flammentemperatur vermieden. Zusätzlich zu den anhand Figur 1 bereits erläuterten Maßnahmen wird die Flammentemperatur wird im Bereich der Wendepunkte A, B gesenkt. Dadurch wird die Vorform dort mit einer geringeren Heizleistung beaufschlagt, so daß die Temperaturerhöhung aufgrund des doppelten Aufheizens der Vorformoberfläche durch die Hin- und Herbewegung im Bereich der Wendepunkte A, B lediglich 35 °C beträgt.

## Patentansprüche

1. Verfahren zur Herstellung von Quarzglaskörpem, durch Abscheiden von SiO₂-Partikeln auf der Zylindermantelfläche eines um seine Längsachse rotierenden, zylinderförmigen Trägers unter Bildung einer länglichen, porösen Vorform, wobei die SiO₂-Partikel in einer Vielzahl von Abscheidebrennern gebildet werden, die in mindestens einer parallel zur Längsachse des Trägers verlaufenden Brennerreihe, die zwischen Wendepunkten, an denen sich ihre Bewegungsrichtung umkehrt, mit einer vorgegebenen Translationsgeschwindigkeit hin- und herbewegt wird, angeordnet sind, und Sintem der so hergestellten Vorform, **dadurch gekennzeichnet, daß** der Basiswert der Oberflächentemperatur der sich bildenden Vorform (62) im Bereich zwischen 1050 °C und 1350 °C, die mittlere Umfangsgeschwindigkeit der Vorform (62) im Bereich zwischen 8 m/min und 15 m/min und die mittlere Translationsgeschwindigkeit der Brennerreihe (66) im Bereich zwischen 300 mm/min und 800 mm/min gehalten werden, und/oder daß im Bereich der Wendepunkt (A; B) die Flammentemperatur der Abscheidebrenner (65) gesenkt wird.

2. Verfahren nach Anspruch 1, **dadurch gekennzeichnet, daß** der Abstand benachbarter Wendepunkte (A; B) im Bereich zwischen 5 cm und 40 cm gehalten wird.

3. Verfahren nach einem der vorhergehenden Ansprüche 1 oder 2, **dadurch gekennzeichnet, daß** zwischen zwei benachbarten Abscheidebrennern einer Brennerreihe jeweils mindestens ein Warmhaltebrenner eingesetzt wird.

4. Verfahren nach mindestens einem der vorhergehenden Ansprüchen 1 bis 3, **dadurch gekennzeichnet, daß** die Flammentemperatur gesenkt wird, indem die Zufuhrrate von Brennergasen zu den Abscheidebrennem (65) relativ zu den Zufuhrraten von anderen den Abscheidebrennem (65) zugeführten Gasen verringert wird.

5. Verfahren nach mindestens einem der vorhergehenden Ansprüchen 1 bis 4, **dadurch gekennzeichnet, daß** Inertgas den Abscheidebrennem (65) zugeführt oder die Zufuhr von Inertgas erhöht wird.

6. Verfahren nach mindestens einem der vorhergehenden Ansprüchen 1 bis 5, **dadurch gekennzeichnet, daß** die Zufuhr von Ausgangsstoffen zur Bildung der SiO₂-Partikel zu den Abscheidebrennem relativ zu der Zufuhr von Sauerstoff und/oder Wasserstoff erhöht wird.

7. Verfahren nach mindestens einem der vorhergehenden Ansprüchen 1 bis 6, **dadurch gekennzeichnet, daß** die Senkung der Flammentemperatur der Abscheidebrenner (65) allmählich erfolgt.

8. Verfahren mindestens einem der vorhergehenden Ansprüchen, **dadurch gekennzeichnet, daß** die Temperatur die Vorformoberfläche im Flammenauftreffpunkt eines Abscheidebrenners (65) gemessen und der gemessene Wert zur Regelung der Flammentemperatur der Abscheidebrenner (65) verwendet wird.

## Claims

1. A process for the production of quartz glass bodies by deposition of SiO₂ particles on the mantle surface of a cylindrical carrier rotating about its longitudinal axis and forming an elongated porous preform, said process comprising: forming the SiO₂ particles in a plurality of hydrolysis burners which are arranged in at least one burner row disposed parallel to the longitudinal axis of the carrier and reciprocally moving at preset transitional speed forward and back between respective turnaround points at which turnaround points the direction of reciprocating movement is reversed, and sintering of the preform thus produced, **characterized in that** the base value of the surface temperature of the preform (62) being folmed is kept in a range betweeen 1050 °C and 1350 °C, that the avarage peripheral velocity of the preform (62) is kept in the range between 8 m/min and 15 m/min, and that the avearge translational velocity of the burner row (66) is kept in an range between 300 mm/min and 800 mm/min, and that the flame temperature of the hydrolysis burners (65) is lowered in the region of the turnaround points.

2. A process according to claim 1, **characterized in that** the distance of adjoining turnaround points (A; B) is kept in a range between 5 cm and 40 cm.

3. A process according to one of the preceding claims 1 or 2, **characterized in that** a warming burner ist positioned between two adjoining hydrolysis burners of the burner row.

4. A process according to at least to one of the preceding claims 1 to 3, **characterized in that** the flame temperature being lowered by reducing the rate of flow of the fuel gases in relation to the rate of flow of the other gases being supplied to the hydrolysis burners (65).

5. A process according to at least to one of the preceding claims 1 to 4, **characterized in that** the hydrolysis burners (65) are supplied with inert gas or that the supply of inert gas is increased.

6. A process according to at least to one of the preceding claims 1 to 5, **characterized in that** the hydrolysis burners are supplied with starting material for the formation of SiO₂ particles at a supply rate, and the flame temperature being reduced by increasing the rate of supply of the starting material to the hydrolysis burners relative to the supply of oxygen and/or hydrogen.

7. A process according to at least to one of the preceding claims 1 to 6, **characterized in that** the decrease of the flame temperature of the hydrolysis burners (65) takes place gradually.

8. A process according to at least to one of the preceding claims, **characterized in that** the preform surface temperature is measured in a flame impingement area of one of the hydrolysis burners (65) and the resulting measurement value is used for regulating the flame temperature of the hydrolysis burner (65).

## Revendications

1. Procédé de production de corps en verre de quartz, par séparation de particules de SiO₂ à la surface d'un corps de cylindre d'un support cylindrique tournant autour de son axe longitudinal avec formation d'une ébauche poreuse longitudinale, les particules de SiO₂ étant formées dans un grand nombre de brûleurs de séparation qui sont disposés en au moins une rangée de brûleurs alignée parallèlement à l'axe longitudinal du support, se déplaçant entre des points de retournement avec une vitesse de translation préalablement donnée, et frittage de l'ébauche ainsi produite,
**caractérisé en ce que**
la valeur de base de la température de surface de l'ébauche (62) qui se forme est maintenue dans un intervalle compris entre 1050°C et 1350°C, la vitesse circonférentielle moyenne de l'ébauche (62) est maintenue dans un intervalle compris entre 8 m/mn et 15 m/mn et la vitesse moyenne de translation de la série de brûleurs (66) est maintenue dans un intervalle compris entre 300 mm/mn et 800 mm/mn, et/ou dans la zone des points de retournement (A ; B) la température de la flamme des brûleurs de séparation (65) est abaissée.

2. Procédé selon la revendication 1,
**caractérisé en ce que**
l'intervalle entre deux points de retournement voisins (A ; B) est maintenu dans un intervalle compris entre 5 cm et 40 cm.

3. Procédé selon l'une des revendications 1 ou 2 précédentes,
**caractérisé en ce qu'**
entre deux brûleurs de séparation voisins d'une rangée de brûleurs on utilise toujours au moins un brûleur de maintien de la température.

4. Procédé selon au moins une des revendications 1 à 3 précédentes,
**caractérisé en ce qu'**
on abaisse la température de la flamme en diminuant la vitesse d'apport de gaz de brûleur dans les brûleurs de séparation (65) relativement aux vitesses d'apport d'autres gaz introduits dans les brûleurs de séparation (65).

5. Procédé selon au moins une des revendications 1 à 4 précédentes,
**caractérisé en ce qu'**
on introduit un gaz inerte ou on accroît l'introduction d'un gaz inerte dans les brûleurs de séparation (65).

6. Procédé selon au moins une des revendications 1 à 5 précédentes,
**caractérisé en ce qu'**
on accroît l'apport de produits de départ pour la formation des particules de SiO₂ dans les brûleurs de séparation relativement à l'apport d'oxygène et/ou d'hydrogène.

7. Procédé selon au moins une des revendications 1 à 6 précédentes,
**caractérisé en ce que**
l'abaissement de la température de la flamme des brûleurs de séparation (65) s'effectue peu à peu.

8. Procédé selon au moins une des revendications précédentes,
**caractérisé en ce qu'**
on mesure la température de la surface de l'ébauche au point d'impact de la flamme d'un brûleur de séparation (65) et on utilise la valeur mesurée pour le réglage de la température de la flamme des brûleurs de séparation (65).
